# FASCICULE DE BREVET EUROPEEN

(11) **EP 3 383 820 B1**
(45) Date de publication et mention de la délivrance du brevet: **05.02.2020**
(21) Numéro de dépôt: 16819610.3
(22) Date de dépôt: 05.12.2016
(51) Int. Cl.: C04B 28/06, B28C 5/02, B28C 5/06, C04B 111/00

(54) **ENDUIT INTERIEUR EN PATE COMPRENANT UN SYSTÈME BI-COMPOSANT ET PROCEDE D'APPLICATION**
INNENPASTENBESCHICHTUNG MIT EINEM ZWEIKOMPONENTENSYSTEM UND AUFTRAGSVERFAHREN
INDOOR PASTE COATING COMPRISING A TWO-COMPONENT SYSTEM AND APPLICATION METHOD

(30) Priorité: 04.12.2015 FR 1561884
(43) Date de publication de la demande: 10.10.2018
(73) Titulaire: International Coating Products, 01150 Lagnieu (FR)
(72) Inventeur: BERGLIND, Staffan, 69270 Fontaines sur Saone (FR); MARATRAT, Audrey, 38390 Parmilieu (FR); JEANNETTE, Thierry, 92370 Chaville (FR)
(74) Mandataire: Plasseraud IP
(86) Numéro de dépôt international: PCT/FR2016/053215
(87) Numéro de publication internationale: WO 2017/093703

(56) Documents cités:
- EP-A1- 2 431 341
- EP-A1- 2 607 330
- WO-A1-2011/083174
- WO-A2-2014/009298
- FR-A1- 2 918 055
- FR-A1- 3 014 430
- FR-A3- 2 763 937
- US-A- 4 088 804
- US-A- 4 455 171
- US-A- 4 814 201
- US-A- 4 934 596
- M. Thewes ET AL: "Mörtel im Tunnelbau Stand der Technik und aktuelle Entwicklungen zur Verfüllung des Ringspaltes bei Tunnelvortriebsmaschinen", BauPortal 12/2009, 31 décembre 2009 (2009-12-31), pages 706-711, XP055198529, Extrait de l'Internet: URL:www.baumaschine.de/tunnelbau [extrait le 2015-06-26]

## Description

### Domaine technique

Le domaine technique de l'invention est celui des enduits intérieurs en pâte pour le bâtiment.

Plus précisément, la présente invention concerne un enduit intérieur en pâte, comprenant un système bicomposant à mélanger au moment de son utilisation, à base de liant organique et d'aluminate de calcium. Elle vise également le procédé d'application dudit enduit.

### Arrière-plan technologique

Les enduits intérieurs pour le bâtiment couvrent les domaines d'emploi suivants :
- enduits de peinture pour la préparation des supports (selon NF P 30-608 et EN16566),
- enduits de jointoiement des plaques de plâtre (selon EN 13963),
- enduits de maçonnerie pour l'intérieur (EN 15824).

Traditionnellement, les enduits intérieurs existent sous forme de poudre, principalement à base de liant minéral et/ou hydraulique, et sous forme de pâte prête à l'emploi (principalement à base de liant organique). Chacune de ces deux formes présente des avantages et des inconvénients pour l'utilisateur.

D'un côté, les produits sous forme de poudre sont stockés à l'état pulvérulent dans des sacs, avant d'être mélangés avec de l'eau lors de la mise en œuvre sur chantiers. Les enduits en poudre peuvent être appliqués en forte épaisseur sans couler et leur temps d'attente entre deux couches ("temps de redoublement") et de séchage sont relativement courts. Par contre, leur manipulation nécessite de disposer d'outils de gâchage, et de respecter scrupuleusement les rapports déterminés de poudre et d'eau, sous peine d'obtenir un produit ne présentant pas les propriétés souhaitées pour l'application sur le support. Or, le respect des rapports de gâchage poudre/eau n'est pas des plus faciles sur les chantiers. L'utilisation de ces produits en poudre présente également l'inconvénient de produire d'importantes émissions de poussières qui peuvent être particulièrement gênantes pour l'utilisateur.

D'un autre côté, les produits sous forme de pâte à base de liant organique, malgré leur praticité du fait de leur caractère « prêt à l'emploi », présentent un certain nombre de désavantages par rapport aux enduits en poudre à base de plâtre ou par rapport à des mortiers à base de ciment, qui limitent leur usage, à savoir :
- temps de séchage : dans des conditions d'application défavorables (froid, humidité, manque de ventilation) le séchage par voie d'évaporation est plus long que le séchage par hydratation (prise) des produits à liant minéral.
- sensibilité à l'eau : si un enduit à base uniquement de liants polymères à faible dose (en général 1,5% à 3% en équivalent extrait sec pour un enduit standard) est détrempé après séchage par un apport d'eau, l'enduit est fragilisé et des problèmes d'adhérence et/ou de décollage peuvent se produire.
- retrait au séchage : pour des rebouchages d'épaisseur importante, le retrait des enduits en pâte est trop fort (en général 10 à 20% en volume) limitant leur utilisation pratique à des épaisseurs de moins de 5mm par couche pour les meilleurs, et en pratique à moins de 2 mm. De plus, pour des épaisseurs aussi importantes, le temps de séchage est très long, alors qu'un enduit à base de plâtre permet de réduire le retrait à en général moins de 3% pour des épaisseurs allant jusqu'à 25 mm.

Pour tenter de pallier ces inconvénients, il a été développé des enduits comprenant des systèmes bicomposants. Dans ce cas, le mélange des deux composants initiant la réaction de durcissement de la pâte, est réalisé juste avant la mise en œuvre sur le support, permettant ainsi de diminuer le temps de séchage, même dans des conditions climatiques défavorables. Un autre avantage de ce type de système est de pouvoir combiner les avantages des deux types de liant minéral et organique afin d'obtenir un enduit aux performances améliorées.

La demande EP2607330 décrit un système d'isolation comprenant un élément d'isolation et une masse d'enduit bicomposant dont le premier composant pâteux peut notamment comprendre une dispersion de styroacrylate, un ciment d'aluminate de calcium, de l'acide borique, des charges minérales telles que notamment du quartz ou du carbonate, et de l'eau. Le second composant peut notamment comprendre de l'hydroxyde de lithium et de l'eau.

La demande EP0496682A1 décrit un enduit pour le remplissage de joints entre deux plaques de plâtre, se présentant sous la forme de deux composants conservés séparément, le premier composant contenant du plâtre à l'état pulvérulent, et un second composant liquide ou pâteux constitué d'un polymère de type copolymère d'acétate de vinyle et d'éthylène en milieu aqueux jouant le rôle de liant principal du joint. Cet enduit présente avantageusement une teneur en plâtre relativement faible inférieure à 30%, ainsi qu'une bonne résistante mécanique pour assurer la pérennité et la tenue au choc, ainsi qu'une cinétique de durcissement rapide. Il présente l'inconvénient d'exiger de l'utilisateur une manipulation de produit pulvérulent.

La demande de certificat d'utilité FR2763937 décrit un système bicomposant à base de ciment alumineux pour le bâtiment, applicable au domaine de la chimie du bâtiment, et en particulier au collage ou au scellement des matériaux. Le composé A se présente sous forme de pâte aqueuse et est constitué d'une résine polymère et d'un ciment alumineux en suspension dans l'eau, dont l'hydratation est momentanément stoppée par un retardateur à base d'acide borique, ainsi que d'un dispersant organique, d'un agent épaississant et de charges minérales. Le composé B destiné à initier le durcissement du ciment se présente également sous la forme d'une pâte aqueuse, et est composé d'un mélange de chaux hydratée et d'un sel de sodium. Lorsque le composé A et le composé B sont mélangés, le pH du mélange augmente rapidement, ce qui initie le durcissement. Les proportions entre composé A et composé B sont déterminées par le délai souhaité entre malaxage et début du durcissement.

Les brevets EP0241230 et EP0113593 décrivent également des systèmes bicomposants comprenant d'un côté un constituant de base comprenant du ciment et un retardateur, et d'un autre côté un catalyseur constitué de chaux et de sel de lithium, permettant d'obtenir des temps de prise inférieurs à 5 minutes et une résistance mécanique élevée.

Cependant, les systèmes bicomposants évoqués ci-dessus sont perfectibles, du fait de la toxicité de certains de leurs composants vis-à-vis de l'environnement, et de leur corrosivité qui confère un caractère dangereux à leur manipulation.

Il existe donc un réel besoin pour les utilisateurs de disposer d'un enduit intérieur en pâte présentant les avantages d'un système bi-composant, notamment au niveau de la stabilité au stockage, une facilité d'application, et des propriétés mécaniques améliorées après application et durcissement, tout en étant non toxique et/ou non corrosif pour l'environnement et/ou l'utilisateur.

### Problème technique - Objectifs de l'invention

Dans ce contexte, le problème technique à la source de la présente invention est de satisfaire à au moins l'un des objectifs suivants :
- fournir un système bicomposant se présentant sous la forme d'un enduit en pâte prête à l'emploi stable au stockage,
- fournir un enduit en pâte applicable sans manipulation de substances corrosives et/ou irritantes pour l'utilisateur,
- fournir un enduit en pâte dont l'application est peu dépendante des conditions de travail extérieures (température, hygrométrie et ventilation des chantiers),
- fournir un enduit en pâte avec possibilité de calibrer un temps de prise approprié,
- fournir un enduit de maçonnerie utilisable en plein ou sur les points singuliers permettant d'atteindre une étanchéité à l'air conforme aux normes les plus strictes (RT2012),
- proposer un enduit utilisable comme enduit de rebouchage de forte épaisseur, ou de ragréage, par exemple de murs ou plafonds en béton, qui une fois appliqué présente un retrait au séchage réduit.

### Brève description de l'invention

Tout ou partie des objectif susvisés est atteint par la présente invention qui concerne, selon le premier de ses aspects, un enduit intérieur en pâte comprenant un système au moins bicomposant comprenant un composant A et un composant B, dans lequel :
A - le composant A comporte :
   a. 1. un liant organique;
   a.2.un liant minéral comprenant un ciment alumineux et/ou un ciment sulfo-alumineux calcique;
   a.3.un bloqueur de prise;
      a.4. des charges minérales;
      a.5. un additif rhéologique;
      a.6. éventuellement un additif non rhéologique;
      a.7. un régulateur/accélérateur de prise choisi dans le groupe comprenant des composés alcalins et/ou alcalino-terreux tels que des oxydes, des hydroxydes, des carbonates, des sulfates et leurs mélanges, ou mieux encore constitué par de l'hydroxyde de lithium, du carbonate de lithium et/ou du sulfate de lithium;
      a.8. éventuellement une base
         - différente du régulateur/accélérateur de prise a.7;
         - apte, en combinaison avec la base b.1 ci-dessous définie, à amener le pH du mélange à une valeur V, qui soit, dans un ordre croissant de préférence, comprise entre 6 et 9, comprise entre 7 et 9, comprise entre 7 et 8;
         - et choisie parmi les bases azotées et le tétrapyrophosphate, le 2-amino-2-methyl-1-propanol étant préféré;
   la concentration de a.7 et éventuellement celle de a.8 dans Aétant telle(s) que le pH de la partie A est inférieur au seuil de prise de la partie A;
   a.9. et de l'eau;
B - le composant B comporte:
   b.1. une base
      - identique ou différente de l'éventuelle base a.8;
      - différente de l'éventuel régulateur/accélérateur de prise a.7;
      - apte, en combinaison avec la base a.8 ci-dessus définie, à amener le pH du mélange à une valeur V, qui soit supérieure ou égale à 9, de préférence supérieure ou égale à 10,;
      - et choisie parmi les bases azotées et le tétrapyrophosphate, le 2-amino-2-methyl-1-propanol étant préféré;
      cet accélérateur de prise b.1 étant présent dans la partie B à une concentration permettant d'atteindre une valeur de pH final supérieure ou égale au seuil de prise de la partie A;
   b.2. de l'eau, et ;
   b.3. éventuellement, un agent épaississant.

Afin de déclencher la prise de l'enduit selon l'invention, le composant A est mélangé avec le composant B, ce qui provoque l'augmentation du pH du milieu, rendant ainsi inopérant le bloqueur de prise.

Il est du mérite des inventeurs d'être parvenus à formuler cet enduit en utilisant un composant B qui soit :
- non irritant
- apte à être incorporé sous forme liquide ou pâteuse et mélangée à une pâte comprenant un liant organique et un liant minéral, sans nuire à la thixotropie de l'enduit final après mélange de A et B de sorte qu'aucune coulure n'est formée après application sur le support,
- apte à amener le pH final à une valeur supérieure ou égale au seuil de prise du composant A.

L'enduit selon l'invention est doté de bonnes performances de mise en œuvre telles que le retrait au séchage, adhérence/cohésion, et moindre sensibilité au détrempage. La pâte obtenue à la fin du mélange du composant A avec le composant B présente également une consistance d'emploi adaptée, est homogène, et possède une viscosité telle que son application est facile, notamment par projection.

Les composants liants minéral a.2 et retardateur de prise a.3 peuvent être introduits dans le mélange soit sous forme d'un mélange préétabli en suspension aqueuse (« slurry »), soit directement et indépendamment l'un de l'autre. L'ordre d'introduction des différents composants doit être tel qu'il permet l'obtention d'un composant A stable dans lequel la prise du liant est bloquée.

Selon un deuxième de ses aspects, l'invention vise également un procédé d'application sur un support, de préférence une surface intérieure de bâtiment de l'enduit selon l'invention comprenant les étapes de :
i- mélange du composant A avec le composant B,
ii- application de l'enduit obtenu de préférence par projection/pulvérisation et/ou talochage.

### Définitions

Dans tout le présent exposé, tout singulier désigne indifféremment un singulier ou un pluriel.

Les définitions données ci-après à titre d'exemples, peuvent servir à l'interprétation du présent exposé.

Par « *enduit en pâte»,* on entend qu'il s'agit e.g. d'un enduit dont la rhéologie est adaptée à une application sur un support par talochage ou projection. Par exemple, l'enduit peut présenter une consistance d'emploi de calibre 9-14 mesurée au Consistor Baronnie, selon la norme EN14496.

Le terme "additif rhéologique" se rapporte notamment à tout additif ayant un impact sur le comportement rhéologique de la composition, notamment sa viscosité et sa consistance.

Sauf indication contraire, les % donnés dans le présent exposé sont des pourcentages en masse.

### Description détaillée de l'invention

### Caractéristiques qualitatives et quantitatives de la composition d'enduit

Selon un mode de réalisation préféré de l'invention, le système bicomposant se caractérise par le fait que ni le composant A ni le composant B, ne sont considérés comme corrosifs et/ou irritants selon le système de classification des produits chimiques en vigueur, et en particulier, aucun des composants A et B n'est étiquetable SGH05 corrosif, ni, de préférence, SGH07 irritant conformément au système général harmonisé de classification et d'étiquetage des produits chimiques (abrégé « système général harmonisé », SGH ; en anglais: *Globally Harmonised System of Classification and Labelling of Chemicals, GHS).*

En effet, l'un des buts de l'invention, comme précédemment évoqué, est de fournir un enduit intérieur bicomposant dont la manipulation puisse se faire sans risque pour le manipulateur, afin d'en améliorer la praticité et le confort d'utilisation, notamment en permettant une application par pulvérisation.

Avantageusement, le rapport massique sur sec [(a.1): (a.2)] varie de [1:3] à [1:0,5] et le pourcentage massique sur sec de (a.2) par rapport au mélange total est inférieur ou égal à 6%.

La variation du rapport liant minéral sur liant organique permet de faire varier notamment l'adhérence de l'enduit final, et d'autres propriétés mécaniques et/ou physiques.

Selon un mode de réalisation préféré, l'enduit présente la composition suivante, en pourcentage massique, dans l'ordre croissant de préférence pour chaque constituant :

**Pour le composant A :**

| | |
|---|---|
| a.1.liant organique | [0,5 -5,0] ;[1,9-2,5] |
| a.2.liant minéral | [1,0 -10,0] ;[2,4-6,0] |
| a.3.bloqueur de prise | [0,001 - 1] ;[0,01 - 0,5] |
| a.4.charges minérales | [40,0-80,0] ;[55,0-66,0] |
| a.5.additif rhéologique | [0,5-7,0] ; [1,4-3] |
| a.6.additif non rhéologique | [0,4-3,0] ; [0,9-1,4] |
| a.7.régulateur/accélérateur de prise | [0,3-2,0] ; [0,7-0,9] |
| a.8.base | [0,05-0,30] ; [0,15-0,20] |
| a.9.eau | [20-50] ; [27-29] |

**Pour le composant B :**

| | |
|---|---|
| b.1.base | [5,0-20,0] ; [8,0-12,0] |
| b.2.eau | [80-95] ; [88-92] |

Le système bicomposant selon l'invention contient un certain nombre d'ingrédients dont le rôle et la définition sont donnés ci-dessous.

### ✔ Liant organique a.1

Avantageusement, le liant organique a.1 est choisi dans le groupe comprenant- ou mieux encore constitué par-: les copolymères d'acétate de vinyle/éthylène, de vinylester d'acide versatique, ou de styrène/acrylique/acrylique, les résines alkydes, et/ou leurs mélanges, de préférence sous forme d'émulsion.

Les produits commerciaux Mowilith LDM 6636 de la société Celanese Emulsion polymers ou Polidisp® 6660 de la société Resiquimica sont des exemples de liants organiques a.1.

### ✔ Liant minéral a.2

Avantageusement, le liant minéral a.2 est choisi dans le groupe comprenant- ou mieux encore constitué par-: les ciments alumineux et/ou les ciments sulfo-alumineux calciques.

### ✔ Bloqueur de prise a.3

Le rôle du bloqueur de prise est d'empêcher la prise du liant minéral dans le composant A, par maintien d'un pH acide.

Avantageusement, le bloqueur de prise a.3 est choisi dans le groupe comprenant- ou mieux encore constitué par-: l'acide borique, l'acide tartrique, l'acide citrique, les sels et/ou les dérivés de ces derniers, l'acide métaphosphorique, l'acide phosphoreux, l'acide phosphorique, l'acide phosphonique et tous composés susceptibles de former l'un quelconque de ces composés par réaction avec l'eau, et/ou leurs mélanges.

Ces bloqueurs de prise ont des mécanismes d'action différents, en limitant la solubilisation du liant minéral dans l'eau, ou en retardant la précipitation massive des hydrates correspondant à la prise. Leur combinaison éventuelle permet, en combinant leurs mécanismes d'action complémentaires, d'obtenir un composant A stable dans le temps.

### ✔ Charges minérales a.4

Avantageusement, les charges minérales a.4 sont choisies dans le groupe comprenant- ou mieux encore constitué par-:
- les charges non allégeantes, de préférence sélectionnées dans le sous-groupe comprenant- ou mieux encore constitué par-: le carbonate de calcium, le quartz, les silicates, le dioxyde de titane, la dolomie, et leurs mélanges;
- les charges allégeantes, de préférence sélectionnées dans le sous-groupe comprenant- ou mieux encore constitué par-: les cénosphères de silicates d'aluminium, les perlites expansées hydrofugées, les billes de verre type PORAVER et leurs mélanges;
- et leurs mélanges.

### ✔ Additif rhéologique a.5

Avantageusement, l'additif rhéologique comprend au moins un composé choisi parmi au moins l'une des familles suivantes : les argiles, par exemple, les bentones, les smectites, les atapulgites (terre à Foulon ou smectites), les éthers cellulosiques, les épaississants synthétiques (acryliques, polyuréthane), les xanthanes, les fibres de cellulose, les dérivés d'amidon modifié, et l'alcool polyvinylique.

### ✔ Additif non rhéologique a.6

Selon un mode de réalisation préféré, l'additif non rhéologique comprend au moins un composé choisi parmi au moins l'une des familles suivantes : les biocides, les anti-mousses, les anti-flashs-rusts, les dispersants, et les cires.

### ✔ Accélérateur de prise a.7

L'accélérateur de prise a.7 a pour fonction d'être un régulateur de la vitesse de prise, une fois que celle-ci est déclenchée par le mélange du composant A avec le composant B.

### ✔ Bases a.8 et b.1

La fonction de la base a.8 dans le composant A est d'augmenter le pH du mélange pour arriver à un pH aux alentours de 7-8, de manière à ce que les épaississants utilisés pour avoir une pâte stable aux caractéristiques rhéologiques recherchées soient atteintes, en terme de thixotropie, de viscosité, de comportement mécanique sous cisaillement, etc.

Les bases a.8 et b.1, qui sont des bases azotées, avantageusement non corrosives, (selon le système de classification des produits chimiques en vigueur), peuvent être avantageusement choisies parmi le Tris(hydroxymethyl) Aminométhane, le 2-Amino-2-Ethyl-1,3-Propane-Diol, le N-Butyldiéthanolamine, le Tétrapotassium pyrophosphate, et le 2-amino-2-méthyl-1-propanol.

La base utilisée selon le mode de réalisation préféré de l'invention est le 2-amino-2-méthyl-1-propanol (AMP). En utilisant une dilution suffisante de l'AMP dans l'eau (par exemple, dilution de 2-amino-2-méthyl-1-propanol à 10% dans l'eau (par exemple celle commercialisée sous la dénomination AMP90® par la société ANGUS® CHEMIE), la substance est considérée comme non irritante, contrairement aux autres bases couramment utilisées telles que la soude, l'hydroxyde de potassium, ou la chaux éteinte Ca(OH)₂ jusqu'à des concentrations très faibles. Ainsi, la mise en œuvre des produits et leur manipulation sur chantier reste une opération sans risque particulier, et permet notamment une application du produit par projection.

Un autre avantage est que seul un faible volume est nécessaire pour augmenter le pH suffisamment pour enclencher la prise de l'enduit. Ainsi, l'ajout de l'additif en quantité faible permet une incorporations sans chute de viscosité de l'enduit au-delà des limites permettant de garder des propriétés rhéologiques normales une fois projeté sur les murs (ne doit pas couler, doit pouvoir être lissé avec facilité), et sans que la viscosité de l'enduit n'aurait à être calibrée à niveau trop élevé rendant la projection impossible avec les matériels visés.

### Caractéristiques applicatives de l'enduit

Selon un mode de réalisation préféré, l'enduit est choisi dans le groupe comprenant : les enduits de peinture pour la préparation de supports, les enduits de jointoiement de plaques de plâtre, ou les enduits de maçonnerie/ragréage pour l'intérieur.

La présente invention a pour but de fournir un enduit de peinture pour la préparation des supports (selon NF P 30-608 et EN 16566), notamment des enduits de rebouchage de forte épaisseur, ou de ragréage, par exemple de murs ou plafonds en béton

La présente invention a également pour but de fournir un enduit pour le jointoiement des plaques de plâtre (selon la norme EN 13963). L'avantage de l'invention consiste en la possibilité de moduler le temps de prise/séchage/recouvrabilité par ajustement de la quantité de sulfate de lithium. Cette possibilité est particulièrement intéressante en hiver où l'usage d'enduit à joint en pâte ne se fait pas en pratique toujours dans les conditions optimales (règles de H.R < 65%, bonne ventilation, température supérieure à 5°C), ce qui induit des temps de séchage trop longs et des risques de mauvaise polymérisation. De manière plus générale, c'est un avantage qui pourra être tiré à parti sur des chantiers de petite envergure où l'organisation ne permet pas forcément d'attendre entre deux couches d'enduit.

Enfin, la présente invention a pour but de fournir un enduit de maçonnerie (en plein et sur les points singuliers), selon la norme EN15824, avant isolation/doublage par plaques de plâtre afin d'atteindre une étanchéité à l'air de ces ouvrages plus performante, permettant de garantir la conformité des bâtiments par rapport à des normes de plus en plus strictes (RT2012), sans devoir utiliser des mortiers à la chaux ou des plâtres projetés.

### Procédé d'application de l'enduit

Le procédé selon invention passe par le mélange des composants A&B et le dépôt d'une ou plusieurs couches de ce mélange sur un support, par exemple un support présent à l'intérieur ou à l'extérieur, de préférence à l'intérieur de bâtiments tel qu'un mur, un plafond... ou toute autre surface à enduire.

L'un des avantages de l'enduit selon l'invention est de permettre la mécanisation de son application sur un support.

L'invention sera mieux comprise à la lecture des exemples qui suivent et qui illustrent une formulation préférée de l'enduit selon invention, un mode de préparation de cette formulation, une évaluation des propriétés d'usage de cette formulation d'enduit, ainsi qu'une application de cette formulation d'enduit.

### Exemple 1 : enduit bicomposant AB

**✔ Formulation composant A**

| | | **% en masse** |
|---|---|---|
| a.9 | Eau | 21,6 |
| | Additifs divers : | |
| | - biocides (mélange de 5-chloro-2-méthyl-4-isothiazoline-3-one (CIT) / 2-méthyl-4-isothiazoline-3-one (MIT) et de 2-méthyl-4-isothiazoline-3-one (MIT) / 1,2-benzisothiazoline-3-one (BIT)) | 0,3 |
| | - antimousse (huile minérale) | 0,1 |
| | - anti flash-rust | 0,15 |
| | - dispersant (polyacrylate de sodium) | 0,05 |
| a.5 | Epaississants/additifs rhéologiques : | |
| | - argiles (attapulgite) | 0,7 |
| | - éthers cellulosiques (hydroxyéthylcellulose) | 0,2 |
| a.4 | Charges minérales CaCO₃ | 56,0 |
| a.8 | 2-amino-2-méthyl-1-propanol (commercialisé sous la dénomination AMP90® par la société ANGUS® CHEMIE) | 0,2 |
| a.4 | Charges minérales allégées constituées par des cénosphères | 5,0 |
| a.1 | Copolymère styrène acrylique humide et coalescent (dispersion aqueuse à 50%) : Polidisp® 6660 de la société Resiquimica | 3,7 |
| a.7 | Sulfate de lithium | 1,0 |
| a.2 | Liant minéral constitué par un slurry d'aluminate de calcium à 60 % dans l'eau | 8,4 |
| a.5 | Epaississant synthétique acrylique formé par un copolymère acrylique en émulsion: Viscoatex® 730 de la société Coatex | 0,9 |
| a.6 | Additifs non rhéologiques : | |
| | - fibres de pulpe de cellulose | 1,0 |
| | - cire synthétique à base de paraffines | 0,6 |
| a.3 | Sel d'acide borique | 0,1 |

**✔ Formulation composant B**

| | | **% en masse** |
|---|---|---|
| b.2 | Eau | 89,2 |
| b.1 | 2-amino-2-méthyl-1-propanol(commercialisé sous la dénomination AMP90® par la société ANGUS® CHEMIE) | 10,8 |

**✔ Ratio composant A/Composant B**

| | **Part (%)** |
|---|---|
| Composant A | 96,5 à 98,5 |
| Composant B | 1,5 à 3,5 |

### Méthode de préparation

Le produit est formulé en usine avec une neutralisation du composant A à un pH d'environ 7,5, suffisamment bas pour assurer une stabilité au stockage mais suffisamment haut pour que les épaississants puissent agir et conférer à l'enduit une viscosité de niveau et de stabilité adéquate.

L'ajout de la solution d'AMP90 à 12% permet d'enclencher une prise de l'enduit dans des conditions de température ambiante d'environ 23°C en l'espace d'environ 10 à 15 heures.

### Résultats techniques

### ✔ Retrait au séchage

La mesure du retrait au séchage est réalisée selon le protocole suivant :
- Utiliser un contenant (ex : boite de pétri) de hauteur < 2cm.
- Mesurer la masse d'un sable tamisé à 200 - µm nécessaire pour remplir le contenant et l'araser.
- Remplir le contenant d'enduit et araser.
- Laisser sécher 7 jours.
- Mesurer la masse de sable nécessaire pour combler le retrait de l'enduit dans son contenant en versant le sable sur le contenant puis en l'arasant.

Le rapport de la masse de sable utilisée pour combler le retrait de l'enduit et de la masse de sable utilisée pour remplir le contenant vide donne un pourcentage de rétraction.

Les résultats techniques en termes de retrait au séchage sont spectaculaires, de près de 12% on passe à environ 2% de retrait en volume par l'apport du liant hydraulique dans un enduit de ce type.

### ✔ Adhérence/cohésion

L'adhérence est réalisée selon la norme NF EN 1542, ou ISO 4624.

Le produit est un peu moins adhérent (0.86 N/mm² sur béton en 1mm épais) qu'un enduit en pâte équivalent ne contenant pas de slurry d'aluminate de calcium (0.99 N/mm² sur béton en 1mm) mais reste dans des adhérences acceptables avec une limite fixée à 0.5 N/mm² pour un enduit répondant à la norme EN16566, à 0.3 N/mm² pour un enduit couvert par la norme EN 15824 ou, à titre d'exemple, une limite fixée à 0.1 N/mm² pour les enduits à base plâtre couverts par la norme EN13279.

### Exemple 2 : Application de l'enduit selon l'exemple 1.

Une pompe à vis Moineau basse pression (pression de travail nominale 30-40 bars) ou haute pression (pression de travail nominale 80 à 140 bars), ou avec une pompe à piston hydraulique airless de type Speeflo-TYREX (pression de travail nominale 180 à 220 bars), permet l'acheminement du composant A, de sa source, jusqu'au corps de lance.

Le mélange A&B se fait nécessairement dans la tête de projection afin que la prise du produit ne puisse pas cimenter l'intérieur de la pompe ou des tuyaux si le matériel n'est pas rincé soigneusement après utilisation.

Le composant B est alimenté à partir de sa source d'approvisionnement classique, tel qu'un un pot pression traditionnel équipé d'une pompe (maximum 3,5 bars), avec des composants améliorés pour supporter le pH élevé du composant B.

Le dispositif est conçu pour donner un rapport de mélange correspondant au pourcentage recherché.

## Revendications

1. Enduit intérieur en pâte comprenant un système au moins bicomposant comprenant un composant A et un composant B, dans lequel :
A - le composant A comporte :
a.1. un liant organique ;
a.2.un liant minéral comprenant un ciment alumineux et/ou un ciment sulfo-alumineux calcique ;
a.3.un bloqueur de prise ;
a.4. des charges minérales ;
a.5. un additif rhéologique ;
a.6. éventuellement un additif non rhéologique ;
a.7. un régulateur/accélérateur de prise choisi dans le groupe comprenant des composés alcalins et/ou alcalino-terreux tels que des oxydes, des hydroxydes, des carbonates, des sulfates et leurs mélanges, ou mieux encore constitué par de l'hydroxyde de lithium, du carbonate de lithium et/ou du sulfate de lithium ;
a.8. éventuellement une base
• différente du régulateur/accélérateur de prise a.7 ;
• apte, en combinaison avec la base b.1 ci-dessous définie, à amener le pH du mélange à une valeur V, qui soit, dans un ordre croissant de préférence, comprise entre 6 et 9, comprise entre 7 et 9, comprise entre 7 et 8 ;
• et choisie parmi les bases azotées et le tétrapyrophosphate, le 2-amino-2-methyl-1-propanol étant préféré ;
la concentration de a.7 et éventuellement celle de a.8 dans A étant telle(s) que le pH de la partie A est inférieur au seuil de prise de la partie A ;
a.9. et de l'eau;
B - le composant B comporte:
b.1. une base
• identique ou différente de l'éventuelle base a.8 ;
• différente de l'éventuel régulateur/accélérateur de prise a.7 ;
• apte, en combinaison avec la base a.8 ci-dessus définie, à amener le pH du mélange à une valeur V, qui soit supérieure ou égale à 9, de préférence supérieure ou égale à 10 ;
• et choisie parmi les bases azotées et le tétrapyrophosphate, le 2-amino-2-methyl-1-propanol étant préféré ;
cet accélérateur de prise b.1 étant présent dans la partie B à une concentration permettant d'atteindre une valeur de pH final supérieure ou égale au seuil de prise de la partie A ;
b.2. de l'eau, et ;
b.3. éventuellement, un agent épaississant.

2. Enduit selon la revendication 1, **caractérisé en ce que** ni le composant A, ni le composant B, ne sont corrosifs et/ou irritants, et de préférence non étiquetables SGH05 corrosif, ni, de préférence, SGH07 irritants conformément au système général harmonisé de classification et d'étiquetage des produits chimiques (abrégé « système général harmonisé », SGH ; en anglais: *Globally Harmonised System of Classification and Labelling of Chemicals, GHS).*

3. Enduit selon la revendication 1 ou 2, **caractérisé en ce que** le rapport massique sur sec [(a.1): (a.2)] varie de [1:3] à [1:0,5] et **en ce que** le pourcentage massique sur sec de (a.2) par rapport au mélange total est inférieur ou égal à 6%.

4. Enduit selon l'une des revendications précédentes, **caractérisé en ce qu'**il a la composition suivante, en pourcentage massique, dans l'ordre croissant de préférence pour chaque constituant :
**Pour le composant A :**
| | |
|---|---|
| a.1.liant organique | [0,5 -5,0] ;[1,9-2,5] |
| a.2.liant minéral | [1,0 -10,0] ;[2,4-6,0] |
| a.3.bloqueur de prise | [0,001 - 1] ;[0,01 - 0,5] |
| a.4.charges minérales | [40,0-80,0] ;[55,0-66,0] |
| a.5. additif rhéologique | [0,5-7,0] ; [1,4-3] |
| a.6.additif non rhéologique | [0,4-3,0] ; [0,9-1,4] |
| a.7.régulateur/accélérateur de prise | [0,3-2,0] ; [0,7-0,9] |
| a.8.base | [0,05-0,30] ; [0,15-0,20] |
| a.9. eau | [20-50] ; [27-29] |
**Pour le composant B :**
| | |
|---|---|
| b.1.base | [5,0-20,0] ; [8,0-12,0] |
| b.2.eau | [80-95] ; [88-92] |

5. Enduit selon l'une au moins des revendications précédentes, **caractérisé en ce que** le liant organique a.1 est choisi dans le groupe comprenant- ou mieux encore constitué par-: des copolymères d'acétate de vinyle/éthylène, de vinylester d'acide versatique, de styrène/acrylique/acrylique, de résines alkydes et/ou leurs mélanges, de préférence sous forme d'émulsion.

6. Enduit selon l'une au moins des revendications précédentes, **caractérisé en ce que** le bloqueur de prise a.3 est choisi dans le groupe comprenant- ou mieux encore constitué par-: l'acide borique, l'acide tartrique, l'acide citrique, les sels et/ou les dérivés de ces derniers, l'acide métaphosphorique, l'acide phosphoreux, l'acide phosphorique, l'acide phosphonique et tous composés susceptibles de former l'un quelconque de ces composés par réaction avec l'eau, et/ou leurs mélanges.

7. Enduit selon l'une au moins des revendications précédentes, **caractérisé en ce que** les charges minérales a.4 sont choisies dans le groupe comprenant- ou mieux encore constitué par-:
• les charges non allégeantes, de préférence sélectionnées dans le sous-groupe comprenant- ou mieux encore constitué par-: le carbonate de calcium, le quartz, les silicates, le dioxyde de titane, la dolomie, et leurs mélanges;
• les charges allégeantes, de préférence sélectionnées dans le sous-groupe comprenant- ou mieux encore constitué par-: les cénosphères de silicates d'aluminium, les perlites expansées hydrofugées, et leurs mélanges;
• et leurs mélanges.

8. Enduit selon l'une au moins des revendications précédentes, **caractérisé en ce que** l'additif non rhéologique comprend au moins un composé choisi parmi au moins l'une des familles suivantes : les biocides, les anti-mousses, les anti-flashs-rusts, les dispersants, et les cires.

9. Enduit selon l'une des revendications précédentes, **caractérisé en ce que** l'additif rhéologique comprend au moins un composé choisi parmi au moins l'une des familles suivantes : les argiles, les éthers cellulosiques, les épaississants synthétiques, les xanthanes, les fibres de cellulose, les dérivés d'amidon modifié, et l'alcool polyvinylique.

10. Enduit selon l'une au moins des revendications précédentes, **caractérisé en ce que** l'enduit est choisi dans le groupe comprenant : les enduits de peinture pour la préparation de supports, les enduits de jointoiement de plaques de plâtre, ou les enduits de maçonnerie/ragréage pour l'intérieur.

11. Procédé d'application sur un support, de préférence une surface intérieure de bâtiment de l'enduit selon l'une au moins des revendications 1 à 10 comprenant les étapes de :
i- mélange du composant A avec le composant B,
ii- application de l'enduit obtenu de préférence par projection/pulvérisation et/ou talochage.

## Patentansprüche

1. Innenbeschichtung als Paste, umfassend ein mindestens zweikomponentiges System, umfassend eine Komponente A und eine Komponente B, worin :
A - Komponente A aufweist:
a.1. ein organisches Bindemittel;
a.2.ein anorganisches Bindemittel, umfassend einen Aluminiumzement und/oder einen sulfo-aluminösen Kalziumzement;
a.3. einen Abbindehemmer;
a.4. mineralische Füllstoffe;
a.5. ein rheologisches Additiv;
a.6. möglicherweise ein nicht-rheologisches Additiv;
a.7. einen Abbinderegulator/Beschleuniger, ausgewählt aus der Gruppe bestehend aus alkalischen und/oder Erdalkaliverbindungen wie Oxiden, Hydroxiden, Carbonaten, Sulfaten und Mischungen davon, oder besser noch bestehend aus Lithiumhydroxid, Lithiumcarbonat und/oder Lithiumsulfat;
a.8.möglicherweise eine Base
• die sich vom Abbinderegulator/Beschleuniger a.7. unterscheidet;
• die in Kombination mit der nachstehend definierten Base b.1 in der Lage ist, den pH-Wert der Mischung auf einen Wert V zu bringen, der in zunehmender Reihenfolge der Präferenz zwischen 6 und 9, zwischen 7 und 9, zwischen 7 und 8 liegt;
• und ausgewählt ist aus stickstoffhaltigen Basen und Tetrapyrophosphat, wobei 2-Amino-2-methyl-1-propanol bevorzugt wird;
wobei die Konzentration von a.7 und gegebenenfalls von a.8 in A so ist, dass der pH-Wert von Teil A unter der Einlassschwelle von Teil A liegt;
a.9. und Wasser;
B - Komponente B aufweist:
b.1. eine Base
• gleich oder verschieden von der möglichen Base a.8;
• abweichend vom möglichen Abbinderegulator/Beschleuniger a.7;
• die in Kombination mit der vorstehend definierten Base a.8 in der Lage ist, den pH-Wert der Mischung auf einen Wert V zu bringen, der größer oder gleich 9, vorzugsweise größer oder gleich 10 ist;
• und ausgewählt aus stickstoffhaltigen Basen und Tetrapyrophosphat, wobei 2-Amino-2-methyl-1-propanol bevorzugt wird;
wobei dieser Abbindebeschleuniger b.1 in Teil B in einer Konzentration vorliegt, die es ermöglicht, einen pH-Endwert zu erreichen, der größer oder gleich dem Einstellschwellenwert von Teil A ist;
b.2. Wasser, und;
b.3.möglicherweise ein Verdickungsmittel.

2. Beschichtung nach Anspruch 1, **dadurch gekennzeichnet, dass** weder die Komponente A noch die Komponente B korrosiv und/oder reizend ist und vorzugsweise nicht als korrosiv SGH05 oder vorzugsweise SGH07 reizend nach dem global harmonisierten System zur Einstufung und Kennzeichnung von Chemikalien (abgekürzt "Global harmonisiertes System", SGH; in Englisch: *Global Harmonized System of Classification and Labelling of Chemicals*) bezeichnet ist.

3. Beschichtung nach Anspruch 1 oder 2, **dadurch gekennzeichnet, dass** das Masse-Trocken-Verhältnis [(a.1): (a.2)] von [1:3] bis[1:0.5] variiert und dass der Masse-Trocken-Prozentsatz von (a.2) bezogen auf die Gesamtmischung kleiner oder gleich 6% ist.

4. Beschichtung nach einem der vorstehenden Ansprüche, **dadurch gekennzeichnet, dass** sie die folgende Zusammensetzung in Massenprozent in zunehmender Reihenfolge der Präferenz für jede Komponente aufweist:
**Für Komponente A :**
| | |
|---|---|
| a.1. Organisches Bindemittel | [0,5-5,0]; [1,9-2,5] |
| a.2. Anorganische Bindemittel | [1,0-10,0]; [2,4-6,0] |
| a.3. Abbindehemmer | [0,001-1] ;[0,01-0,5] |
| a.4. mineralische Füllstoffe | [40,0-80,0]; [55,0-66,0] |
| a.5. rheologisches Additiv | [0,5-7,0]; [1,4-3] |
| a.6. nichtrheologisches Additiv | [0,4-3,0]; [0,9-1,4] |
| a.7. Abbinderegulator/Beschleuniger | [0,3-2,0]; [0,7-0,9] |
| a.8. Base | [0,05-0,30]; [0,15-0,20] |
| a.9. Wasser | [20-50];[27-29] |
**Für die Komponente B :**
| | |
|---|---|
| b.1. Base | [5.0-20.0]; [8.0-12.0] |
| b.2. Wasser | [80-95];[88-92] |

5. Beschichtung nach mindestens einem der vorstehenden Ansprüche, **dadurch gekennzeichnet, dass** das organische Bindemittel a.1 ausgewählt ist aus der Gruppe bestehend aus - oder besser noch bestehend aus - Copolymeren von Vinylacetat/Ethylen, Vinylester der Versatinsäure, Styrol/Acryl/Acryl, Alkydharzen und/oder Mischungen davon, vorzugsweise in Emulsionsform.

6. Beschichtung nach mindestens einem der vorstehenden Ansprüche, **dadurch gekennzeichnet, dass** der Abbindehemmer a.3 ausgewählt ist aus der Gruppe bestehend aus - oder besser noch bestehend aus - Borsäure, Weinsäure, Zitronensäure, Salzen und/oder Derivaten davon, Metaphosphorsäure, Phosphorige Säure, Phosphorsäure, Phosphonsäure und allen Verbindungen, die eine dieser Verbindungen durch Reaktion mit Wasser und/oder Mischungen davon bilden können.

7. Beschichtung nach mindestens einem der vorstehenden Ansprüche, **dadurch gekennzeichnet, dass** die mineralischen Füllstoffe a. 4 ausgewählt sind aus der Gruppe beinhaltend, oder besser noch bestehend aus:
• nicht beschwerende Füllstoffe, vorzugsweise ausgewählt aus der Untergruppe beinhaltend - oder besser noch bestehend aus: Calciumcarbonat, Quarz, Silikaten, Titandioxid, Dolomit und Mischungen derselben;
• beschwerende Füllstoffe, vorzugsweise ausgewählt aus der Untergruppe, beinhaltend - oder besser noch bestehend aus: Aluminiumsilikat-Zenosphären, wasserabweisenden expandierten Perlen und deren Mischungen;
• und deren Mischungen.

8. Beschichtung nach mindestens einem der vorstehenden Ansprüche, **dadurch gekennzeichnet, dass** das nicht-rheologische Additiv mindestens eine Verbindung umfasst, die aus mindestens einer der folgenden Familien ausgewählt ist: Biozide, Antischaummittel, Anti-Blitz-Rost, Dispersionsmittel und Wachse.

9. Beschichtung nach einem der vorstehenden Ansprüche, **dadurch gekennzeichnet, dass** das rheologische Additiv mindestens eine Verbindung umfasst, die aus mindestens einer der folgenden Familien ausgewählt ist: Tone, Celluloseether, synthetische Verdickungsmittel, Xanthane, Cellulosefasern, modifizierte Stärkederivate und Polyvinylalkohol.

10. Beschichtung nach mindestens einem der vorstehenden Ansprüche, **dadurch gekennzeichnet, dass** die Beschichtung ausgewählt ist aus der Gruppe beinhaltend: Farbanstrichen zur Herstellung von Substraten, Gipskarton-Verbindungsbeschichtungen oder Mauerwerk/Putzen für den Innenbereich.

11. Verfahren zum Auftragen von Putz auf einen Träger, vorzugsweise eine innere Gebäudeoberfläche, nach mindestens einem der Ansprüche 1 bis 10, beinhaltend die Schritte:
i- Mischen der Komponente A mit der Komponente B,
ii- Aufbringen der Beschichtung, die vorzugsweise durch Sprühen und/oder Sprühen und/oder Glätten erhalten wird.

## Claims

1. Interior coating in the form of a paste comprising a system having at least two components comprising a component A and a component B, in which:
A - component A comprises:
a.1. an organic binder;
a.2. a mineral binder comprising a high alumina cement and/or a calcium sulfoaluminate cement;
a.3. a setting retarder;
a.4. mineral fillers;
a.5. a rheological additive;
a.6. optionally, a non-rheological additive;
a.7. a setting regulator/accelerator selected from the group comprising alkaline and/or alkaline-earth compounds such as oxides, hydroxides, carbonates, sulphates and mixtures thereof, or better still constituted by lithium hydroxide, lithium carbonate and/or lithium sulphate;
a.8. optionally, a base
• different from the setting regulator/accelerator a.7;
• suitable, in combination with the base b.l defined below, for bringing the pH of the mixture to a value V, which in an increasing order of preference is comprised between 6 and 9, comprised between 7 and 9, comprised between 7 and 8;
• and selected from the nitrogen-containing bases and tetra pyrophosphate, 2-amino-2-methyl-1-propanol being preferred;
the concentration of a.7 and optionally that of a.8 in A being such that the pH of part A is lower than the setting threshold of part A;
a.9. and water;
B - component B comprises:
b.1. a base
• identical to or different from the optional base a.8;
• different from the optional setting regulator/accelerator a.7;
• suitable, in combination with the base a.8 defined above, for bringing the pH of the mixture to a value V, which is greater than or equal to 9, preferably greater than or equal to 10;
• and selected from the nitrogen-containing bases and tetra pyrophosphate, 2-amino-2-methyl-1-propanol being preferred;
this setting accelerator b.1 being present in part B at a concentration making it possible to reach a final pH value greater than or equal to the setting threshold of part A;
b.2. water, and;
b.3. optionally, a thickening agent.

2. Coating according to claim 1, **characterized in that** neither component A nor component B is corrosive and/or irritant, and preferably, are not required to be labelled GHS05 corrosive, nor, preferably, GHS07 irritant, according to the Globally Harmonised System of Classification and Labelling of Chemicals (short form: General Harmonised System GHS).

3. Coating according to claim 1 or 2, **characterized in that** the dry weight ratio [(a.1):(a.2)] varies from [1:3] to [1:0.5] and **in that** the dry weight percent of (a.2) with respect to the total mixture is less than or equal to 6%.

4. Coating according to one of the preceding claims, **characterized in that** it has the following composition, by weight percent, in increasing order of preference for each constituent:
**For component A :**
| | |
|---|---|
| a.1.organic binder | [0.5 -5.0];[1.9-2.5] |
| a.2.mineral binder | [1.0 -10.0];[2.4-6.0] |
| a.3.setting retarder | [0.001 - 1];[0.01 - 0.5] |
| a.4.mineral fillers | [40.0-80.0];[55.0-66.0] |
| a.5.rheological additive | [0.5-7.0];[1.4-3] |
| a.6.non-rheological additive | [0.4-3.0];[0.9-1.4] |
| a.7.setting regulator/accelerator | [0.3-2.0];[0.7-0.9] |
| a.8.base | [0.05-0.30];[0.15-0.20] |
| a.9.water | [20-50];[27-29] |
**For component B:**
| | |
|---|---|
| b.1.base | [5.0-20.0];[8.0-12.0] |
| b.2.water | [80-95];[88-92] |

5. Coating according to at least one of the preceding claims, **characterized in that** the organic binder a.1 is selected from the group comprising - or better still constituted by -: vinyl acetate-ethylene, versatic acid vinyl ester, styrene/acrylic/acrylic copolymers, alkyd resins and/or mixtures thereof, preferably in the form of an emulsion.

6. Coating according to at least one of the preceding claims, **characterized in that** the setting retarder a.3 is selected from the group comprising - or better still constituted by -: boric acid, tartaric acid, citric acid, the salts and/or derivatives thereof, metaphosphoric acid, phosphorous acid, phosphoric acid, phosphonic acid and all compounds capable of forming any one of these compounds by reaction with water, and/or mixtures thereof.

7. Coating according to at least one of the preceding claims, **characterized in that** the mineral fillers a.4 are selected from the group comprising - or better still constituted by -:
• non-lightweight fillers, preferably selected from the sub-group comprising - or better still constituted by -: calcium carbonate, quartz, silicates, titanium dioxide, dolomite, and mixtures thereof;
• lightweight fillers, preferably selected from the sub-group comprising - or better still constituted by -: alumino-silicate cenospheres, hydrophobic expanded perlites, and mixtures thereof;
• and mixtures thereof.

8. Coating according to at least one of the preceding claims, **characterized in that** the non-rheological additive comprises at least one compound selected from at least one of the following families: biocides, antifoaming agents, anti flash-rust agents, dispersing agents and waxes.

9. Coating according to one of the preceding claims, **characterized in that** the rheological additive comprises at least one compound selected from at least one of the following families: clays, cellulose ethers, synthetic thickeners, xanthenes, cellulose fibres, modified starch derivatives, and polyvinyl alcohol.

10. Coating according to at least one of the preceding claims, **characterized in that** the coating is selected from the group comprising: sealants for the preparation of supports for painting, coatings for filling plasterboard joints, or renders for interior masonry/finishing.

11. Method for applying onto a support, preferably an interior building surface, the coating according to at least one of claims 1 to 10, comprising the steps of:
i- mixing component A with component B,
ii- applying the coating obtained, preferably by spraying/atomization and/or floating.
